# EUROPÄISCHE PATENTSCHRIFT

(11) **EP 3 993 193 B1**
(45) Veröffentlichungstag und Bekanntmachung des Hinweises auf die Patenterteilung: **17.04.2024**
(21) Anmeldenummer: 21200434.5
(22) Anmeldetag: 01.10.2021
(51) Int. Cl.: H02B 13/035, H02G 15/24, H02G 5/00, H01H 1/58

(54) **GASISOLIERTE HOCHSPANNUNGSSTECKVERBINDUNG, AUFWEISEND EINE DRUCKFÜHRENDE UMSCHLIESSUNG, WOBEI EIN ERSTER TEIL DER UMSCHLIESSUNG EINE VERBINDUNGSBUCHSE UND EIN ZWEITER TEIL DER UMSCHLIESSUNG EINEN STECKER AUSBILDET**
GAS-INSULATED HIGH-VOLTAGE PLUG CONNECTION, COMPRISING A PRESSURE-CARRYING ENCLOSURE, WHEREBY A FIRST PART OF THE ENCLOSURE FORMS A CONNECTING SOCKET AND A SECOND PART OF THE ENCLOSURE FORMS A PLUG
CONNECTEUR ENFICHABLE HAUTE TENSION À ISOLATION GAZEUSE, COMPORTANT UNE ENVELOPPE SOUS PRESSION, UNE PREMIÈRE PARTIE DE L'ENVELOPPE FORMANT UN CONNECTEUR FEMELLE ET UNE SECONDE PARTIE DE L'ENVELOPPE FORMANT UN CONNECTEUR MÂLE

(30) Priorität: 29.10.2020 DE 102020128508
(43) Veröffentlichungstag der Anmeldung: 04.05.2022
(73) Patentinhaber: TenneT TSO GmbH, 95448 Bayreuth (DE)
(72) Erfinder: Löbermann, Matthias, 31515 Wunstorf (DE)
(74) Vertreter: Scheffler, Jörg

(56) Entgegenhaltungen:
- WO-A1-2017/162392
- DE-A1- 2 746 566
- FR-A1- 2 882 852
- US-A- 3 902 001
- US-A1- 2016 133 359
- US-B2- 7 357 656

## Beschreibung

Die Erfindung betrifft eine gasisolierte Hochspannungssteckverbindung, aufweisend eine druckführende Umschließung, wobei ein erster Teil der Umschließung eine Verbindungsbuchse und ein zweiter Teil der Umschließung einen Stecker ausbildet, wobei der erste und der zweite Teil der Umschließung jeweils zumindest einen elektrischen Leiter in die Umschließung aufnimmt, wobei die elektrischen Leiter endseitig jeweils eine Kontaktfläche aufweisen. Hierbei weist einer der elektrischen Leiter, durch geeignet verlaufende Einzelleiter, einen Bereich mit einer hohen Flexibilität auf, wobei die Kontaktfläche dieses elektrischen Leiters mittels eines Längenverstellelements verfahrbar gelagert ist.

Bekannte Hochspannungssteckverbindung benötigen aufgrund normativer Anforderungen hinsichtlich Luft- und Kriechstrecken einen großen Bauraum, außer wenn sie mit einem Isoliergas gefüllt sind. Bekannte mit Isoliergas gefüllte Hochspannungssteckverbindungen sind als Einzelstücke hergestellte Schweißkonstruktionen mit sich hieraus ergebenden Fertigungstoleranzen. Damit ein derartiger Stecker und eine derartige Buchse trotz der Fertigungstoleranzen ohne Weiteres miteinander hermetisch dichtend und elektrisch leitend verbindbar sind, werden sie, individualisiert oder aneinander angepasst, paarweise hergestellt, das heißt, dass ein Stecker nur mit einer dazugehörigen Buchse zuverlässig funktioniert.

Ist ein Hochspannungsmodul, wie zum Beispiel ein Transformator defekt oder aufgrund von einer Wartung außer Betrieb zu nehmen, kann dieser nicht durch ein Ersatzmodul getauscht werden, da eine gasisolierte Hochspannungssteckverbindung mit einer anderen SteckerBuchsen-Kombination nicht zuverlässig erzeugbar ist.

Aus der CN 1 10 048 268 A ist ein explosionsgeschützter Steckverbinder bekannt, welcher eine Buchse und einen Stecker aufweist. In der Buchse sind dabei zwei Klemmkontakte angeordnet, in welche zwei über einen Spindeltrieb beweglich im Stecker gelagerte Stiftkontakte einbringbar sind. Zum Einbringen der Stiftkontakte in die Klemmkontakte werden Buchse und Stecker ineinandergesteckt und die Stiftkontakte anschließend über den Spindelantrieb in die Klemmkontakte verfahren. Um dabei die Bewegung der Stiftkontakte ohne einen Defekt der mit den Stiftkontakten verbundenen elektrischen Leiter zu ermöglichen, weisen die innerhalb des Steckers verlaufenden Leiter eine Lose auf, welche sich bei Bewegung der Steckkontakte verringert. Zur Realisierung des Explosionsschutzes weist der Steckverbinder zudem mehrere Dichtungen auf.

Die DE 693 06 886 T2 beschreibt ebenfalls einen explosionsgeschützten Steckverbinder zum Einsatz in explosiver, d. h. brenn- und entflammbarer Gasatmosphäre. Der Steckverbinder weist dabei wiederum eine Buchse sowie einen Stecker auf, wobei in der Buchse zwei Sockelkontakte und in dem Stecker zwei Stiftkontakte ausgeführt sind. Nach dem Ineinanderstecken von Stecker und Buchse werden die endseitig eines Innenzylinders der Buchse angeordneten Sockelkontakte über eine Antriebseinrichtung in den Stecker verfahren, bis die Stiftkontakte in die Sockelkontakte eingreifen. Hierbei wird ein mit den Sockelkontakten verbundener und innerhalb des Innenzylinders der Buchse verlaufender elektrischer Leiter mit-samt des Innenzylinders verschoben, sodass keine Biegebelastung auf den Leiter wirkt. Der Steckverbinder weist zudem eine Einlass- sowie eine Auslassöffnung auf, über welche vor der Kopplung der Stiftkontakte mit den Sockelkontakten zur Entlüftung des Inneren des Steckverbinders ein Reingas geleitet wird und somit gegebenenfalls im Inneren vorhandene explosive Gase ausgeführt werden.

Der DE 692 00 142 T2 ist zudem eine elektrische Anschlussvorrichtung für Leiter bekannt, welche wandartige Kontaktpartner aufweist, an denen die zu verbindenden Leiter befestigt sind. Ein Zwischenraum der Kontaktpartner ist dabei über eine umlaufende Dichtung abgedichtet und weist nach dem Verbinden der Kontaktpartner mehrere ineinandergreifende konzentrische Ringausformungen auf, mittels welchen eine hohe Verschachtelung des Zwischenraums erzielt wird. Dies führt zur Erhöhung der Länge der Lecklinien und Funkenstrecken, die die beiden entscheidenden Größen der dielektrischen Spannungsfestigkeit bilden. Zur Reduzierung der Luftfeuchte im Zwischenraum ist in den Zwischenraum zudem ein feuchtigkeitsabsorbierendes Material eingebracht.

Die WO 2017 / 162 392 A1 beschreibt eine gasisolierte Hochspannungssteckverbindung mit einem Druckbehälter, wobei ein erster Teil des Druckbehälters eine Verbindungsbuchse und ein zweiter Teil des Druckbehälters einen Stecker aufweist. Im ersten und zweiten Teil des Druckbehälters ist jeweils ein elektrischer Leiter respektive mehrere Teilabschnitte eines elektrischen Leiters angeordnet, wobei die elektrischen Leiter jeweils eine Kontaktfläche aufweisen. Dabei weist einer der elektrischen Leiter durch einen Teilabschnitt aus mehreren übereinander angeordneten Lagen von elektrisch leitenden Bändern einen Bereich mit einer hohen Flexibilität auf. Hierdurch ist eine Beweglichkeit des Leiters gegeben, sodass die Kontaktfläche dieses elektrischen Leiters über einen im zweiten Teil des Druckbehälters angeordneten Schwenkarm verstellbar ausgeführt ist.

Auch der FR 2 882 852 A1 ist eine Hochspannungssteckverbindung mit einem Hochspannungsschalter zu entnehmen, welcher zwei in einem Gehäuse angeordnete Kontakte aufweist, wobei zumindest einer der Kontakte über einen Mechanismus beweglich ausgebildet ist.

Aus der US 7 357 656 B2 ist ferner ein Trennschalter, insbesondere zum Einsatz in gasisolierten Hochspannungs-Umspannwerken bekannt. Die Trennvorrichtung ist dabei dazu eingerichtet, einen ersten Abschnitt eines elektrischen Stromkreises elektrisch von einem zweiten Abschnitt des Stromkreises zu trennen. Hierfür umfasst die Trennvorrichtung ein Kontaktpaar mit wenigstens zwei Kontakten, von denen einer ein beweglicher Kontakt ist. Das Kontaktpaar verfügt entsprechend über einen offenen Zustand und einen geschlossenen Zustand und einen flexiblen Leiter, der an einem Ende an dem beweglichen Kontakt befestigt ist. Dieser wird zudem an dessen anderen Ende an einem der Teile einer elektrischen Schaltung befestigt. Der Leiter ist dabei insbesondere als ein flexibles Rohr ausgeführt, welches zumindest an einem Oberflächenabschnitt elektrisch leitfähig ist und eine Biegesteifigkeit aufweist, die niedrig genug ist, um es zu ermöglichen, dass das Rohr ohne Knicken gebogen wird. Zudem weist das Rohr jedoch eine solche Torsionssteifigkeit auf, die hoch genug ist, um es zu ermöglichen, dass das Rohr zumindest im geschlossenen Zustand des Kontaktpaars über eine im Wesentlichen reproduzierbare Form und Position verfügt.

Durch die DE 27 46 566 A1 wird eine Hochspannungsdurchführung zum Anschluss von mit einer Isolierflüssigkeit gefüllten Transformatoren an mit Schwefelhexafluorid gefüllte Kabel oder Schaltanlagen beschrieben. Hierfür ist zwischen dem Transformator und dem angeschlossenen Anlagenteil eine Sicherheitskammer angeordnet, wobei diese, mit einer Isolierflüssigkeit gefüllte, Sicherheitskammer in Achsrichtung nach beiden Seiten durch Stutzen für die Leiterenden abgeschottet und radial durch einen in Achsrichtung zusammenschiebbaren Faltenbalg verschlossen ist. Innerhalb des Faltenbalgs ist ein flexibler Leiter aus miteinander verdrillten Einzellitzen angeordnet, welcher über Schraubverbindungen lösbar ausgeführt ist. So lässt sich nach dem Ablassen der Isolierflüssigkeit aus der Sicherheitskammer über an einem Stutzen ausgeführte Kanäle und nach Lösen des Faltenbalgs der die Leiterenden galvanisch verbindende, flexibler Leiter ohne eine Lageveränderung des Transformators und des hieran angeschlossenen Anlagenteils abnehmen.

Zudem ist durch die US 3 902 001 A eine langgestreckte, zylindrische Abschirmung vor Koronaentladungen bekannt, wobei diese die Verbindung zwischen benachbarten Leiterelementen eines gasisolierten Energieübertragungssystems umschließt. Die Abschirmung wird dabei auf einem der Leiterelemente durch eine flexible Federanordnung gestützt, die während des Montagevorgangs ein erhebliches Maß an Fehlausrichtung zwischen der Abschirmung und dem gegenüberliegenden Leiterelement zulässt.

Die US 2016 / 0 133 359 A1 offenbart zudem eine Isolationsvorrichtung mit zwei elektrischen Kontakten, wobei die Kontakte jeweils mit einem elektrischen Leiter verbunden sind. Die Kontakte selbst sind wiederum jeweils von einer tellerförmigen Isolationsscheibe umgeben, welche abschnittsweise einen Flansch ausbilden. Bei Montage und einem In-Kontakt-Treten der elektrischen Kontakte formen die beiden Isolationsscheiben einen fluiddichten Raum um die beiden elektrischen Kontakte.

Der Erfindung liegt die Aufgabe zugrunde, eine Hochspannungssteckverbindung zu erzeugen, die einerseits besonders kompakt ist und andererseits eine einfache und zuverlässige Verbindungserzeugung von Hochspannungssteckverbindung ermöglicht, auch bei einem Gebrauch von nicht aneinander angepassten Steckern und Buchsen.

Diese Aufgabe wird erfindungsgemäß mit einer Hochspannungssteckverbindung gemäß den Merkmalen des Anspruchs 1 und einem Verfahren gemäß den Merkmalen des nebengeordneten Anspruchs gelöst.

Die weitere Ausgestaltung der Erfindung ist den Unteransprüchen zu entnehmen.

Erfindungsgemäß ist also eine gasisolierte Hochspannungssteckverbindung mit einer druckführenden zumindest zweiteiligen Umschließung vorgesehen, wobei ein erster Teil der Umschließung eine Verbindungsbuchse und ein zweiter Teil der Umschließung einen Stecker aufweist oder umschließt.

Der erste und der zweite Teil der Umschließung nehmen jeweils zumindest einen elektrischen Leiter in die Umschließung auf. Die elektrischen Leiter weisen endseitig jeweils eine Kontaktfläche auf, die beim Erzeugen der Hochspannungssteckverbindung miteinander in Kontakt gebracht werden. Die Kontaktflächen können beispielweise als eine Aderendhülse ausgeführt sein. Einer der elektrischen Leiter weist innerhalb der Umschließung durch geeignet verlaufende Einzelleiter einen Bereich mit einer hohen Flexibilität auf, wobei die Kontaktfläche dieses elektrischen Leiters mittels eines Längenverstellelements verfahrbar gelagert ist.

Die Umschließung besteht aus Gehäuseteilen und kann mit Dichtungen und beispielweise Flanschen, die zur Verschraubung der Gehäuseteile dienen, einen hermetisch dichten Raum innerhalb der Umschließung ausbilden. Die Gehäuseteile sind insbesondere Schweißkonstruktionen oder aus Verbundwerkstoffen hergestellte Körper mit einem hoch zugfesten Fasergelege und weisen bevorzugt eine zylinderförmige Geometrie auf. Die Umschließung weist ein Einlassventil und ein Auslassventil zum Spülen mit einem Gas, insbesondere einem getrockneten Isoliergas, auf.

Als Einzelleiter werden unisolierte, vereinzelte Leiter, also Drähte oder Litzen, verstanden die zum Beispiel ein Stromkabel ausbilden können. Unter geeignet verlaufenden Einzelleitern zur Erzielung einer hohen Flexibilität wird jede Anordnung von Einzelleitern innerhalb der Umschließung verstanden, die es bei der Montage ermöglicht, den flexiblen Bereich in Längsrichtung des elektrischen Leiters erheblich zu vergrößern oder zu verkleinern, also beispielweise zumindest um 10 % oder bevorzugt 20 % der Länge des flexiblen Bereichs.

Zum Erzeugen einer Verbindung mit der erfindungsgemäßen Hochspannungssteckverbindung werden der erste Teil und der zweite Teil der Umschließung druckdicht miteinander verbunden, indem diese beispielweise miteinander verschraubt werden. Folgend wird Gas zum Trocknen der Umschließung durch ein Einlassventil eingelassen und durch ein Auslassventil ausgelassen, wobei nach dem Erreichen der gewünschten Restfeuchte das Auslassventil zuerst verschlossen wird und ein Betriebsdruck in der Umschließung eingestellt wird. Des Weiteren wird die Kontaktfläche des einen elektrischen Leiters gegen die Kontaktfläche des anderen elektrischen Leiters verfahren, bis die gewünschte Kontaktkraft eingestellt ist, um eine elektrische Verbindung mit geringem Übergangswiderstand zu erzeugen.

Die elektrischen Leiter sind erfindungsgemäß Stromkabel, die durch Kabelschotts in die Umschließung geführt werden. Hierdurch wird eine hermetisch dichte Durchführung in die Umschließung mittels Standardkomponenten möglich. Bei der Zuführung der elektrischen Leistung zur Hochspannungssteckverbindung mittels eines Stromkabels kann auf Adapter und eine weitere Verbindungsstelle verzichtet werden.

Erfindungsgemäß sind die Einzelleiter zudem ein Teilbereich des Stromkabels, das durch das Kabelschott geführt ist, die Einzelleiter also aus dem Stromkabel herausgearbeitet und vereinzelt sind. Hierdurch kann auf das Erzeugen einer Verbindung der Einzelleiter mit dem Stromkabel verzichtet werden, wodurch die Hochspannungssteckverbindung einfacher herstellbar und kompakter wird.

Des Weiteren können gemäß einer bevorzugten Ausführungsvariante Einzelleiter verwendet werden, um einen flexiblen Bereich auszubilden, indem die Einzelleiter bevorzugt entlang zumindest eines Stützkörpers geführt werden, der in Verfahrrichtung einer Kraftschlussbrücke und/oder senkrecht dazu längenvariabel ist und weiter bevorzugt eine wellenförmige Geometrie, wie zum Beispiel ein Faltenbalg, aufweist. Ein Verfahren der Kontaktfläche des elektrischen Leiters über einen größeren Weg, wie zum Beispiel 10 cm, durch eine geringe Kraft wird ermöglicht.

Die Kontaktfläche wird durch das Längenverstellelement verfahren, wobei das Längenverstellelement bevorzugt ein Linearantrieb, insbesondere zumindest ein Hydraulikzylinder ist. Der Hydraulikzylinder wird bevorzugt mittels einer in die Umschließung geführten Hydraulikleitung gespeist, wobei die Hydraulikflüssigkeit mittels einer Hydraulikpumpe, wie zum Beispiel einer handbetriebenen Hydraulikpumpe, befördert wird. Bevorzugte Ausführungsformen sehen eine Mehrzahl, wie zum Beispiel zwei, drei oder vier Hydraulikzylinder vor, da hierdurch eine besonders einfache Anordnung der Hydraulikzylinder und Ausgestaltung des Längenverstellelements ermöglicht wird.

Der Linearantrieb kann alternativ als ein Gewindeantrieb ausgeführt werden, der mittels elektrischer oder mechanischer Energie, die in die Umschließung geführt wird, angetrieben wird. Hohe Kontaktkräfte können somit in einfacher Weise, auch ohne die Verwendung einer Hydraulik, realisiert werden.

Zur Erzeugung eines geringen Übergangswiderstands sind hohe Kontaktkräfte notwendig. Um hohe Kontaktkräfte auch nach Setz- und Kriechvorgängen der Kontaktflächen und der sich im Kraftfluss befindlichen Komponenten sicherzustellen, weist das Längenverstellelement weiter bevorzugt einen Energiespeicher auf, der dem Abfall der Kontaktkräfte entgegenwirkt. Der Energiespeicher kann durch ein elastisches Element im Kraftfluss oder im Hydrauliksystem realisiert sein und erhält seine Energie beim Erzeugen der Kontaktkraft. Das Erzeugen und dauerhafte Sicherstellen einer hohen Kontaktkraft in der hermetisch gedichteten Umschließung wird auf einfache Weise ermöglicht.

Das Längenverstellelement ist bevorzugt mittels einer isolierenden Kraftschlussbrücke mit einem elektrischen Leiter verbunden, sodass das Längenverstellelement sich nicht auf dem elektrischen Potential der Hochstromverbindung befindet und keine elektrische Isolierung zur Umschließung aufweisen muss. Es wird ein besonders einfacher und kompakter Aufbau der Hochspannungssteckverbindung ermöglicht.

In einer vorteilhaften Ausführungsform weist das Längenverstellelement eine elektrische Isolierung zu dem elektrischen Leiter auf, die sich unabhängig von der Stellung des Längenverstellelements zwischen dem Längenverstellelement und dem elektrischen Leiter befindet, sodass der notwendige Abstand aufgrund der einzuhaltenden Isolierstrecken bei Isoliergas unterschritten und ein besonders kompakter Aufbau der gasisolierten Hochspannungssteckverbindung erreicht werden kann.

Des Weiteren kann gemäß einer bevorzugten Ausführungsvariante die Innenseite der druckführenden Umschließung mit einem elektrisch isolierenden, bevorzugt wellenförmig ausgebildeten Material beschichtet oder ausgekleidet werden, um die Durchschlagfestigkeit der Hochspannungssteckverbindung zu erhöhen und den Widerstand der Kriechstromstrecke über das Längenverstellelement zu erhöhen.

Die Umschließung weist bevorzugt ein Trocknungsmittel, insbesondere Zeolith, auf, das Restfeuchtigkeit, die nach dem Einstellen des Betriebsdrucks in der Umschließung ist, aufnimmt. Es wird somit vermieden, dass bei geringen Temperaturen Wasser aus dem Isoliergas ausfällt und zu einer Verschlechterung der elektrischen Isolierung oder zu einer vermehrten Oxidation der Komponenten führt. Um die Trocknungsfähigkeit des Trocknungsmittels vor dem Verschließen der Umschließung nicht zu verringern, ist das Trocknungsmittel bis zum Verschließen der Umschließung hermetisch dicht zu verpacken.

Die Erfindung lässt verschiedene Ausführungsformen zu. Zur weiteren Verdeutlichung des Grundprinzips der dichtenden Hochspannungssteckverbindung ist eine davon in der Zeichnung dargestellt und wird nachfolgend beschrieben. Diese zeigt in
- Fig. 1: eine Schnittansicht einer dichtenden Hochspannungssteckverbindung mit geöffnetem elektrischem Kontakt;
- Fig. 2: eine Schnittansicht der dichtenden Hochspannungssteckverbindung mit geschlossenem elektrischem Kontakt.

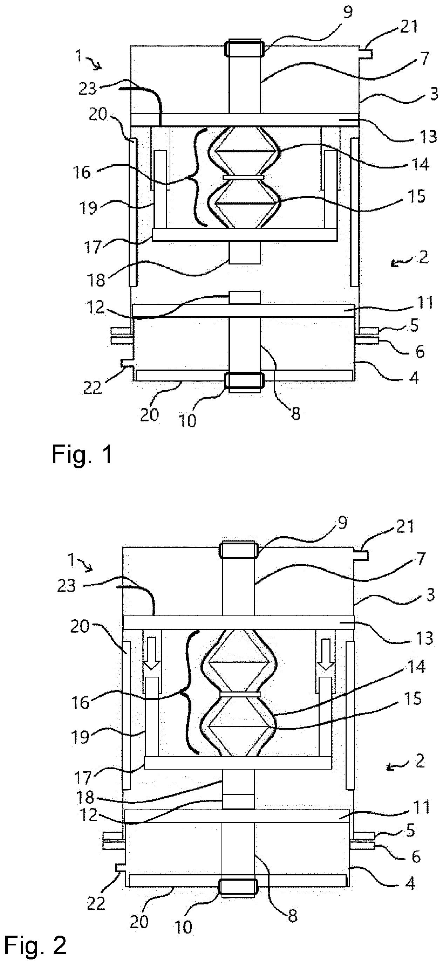

Figur 1 zeigt eine gasisolierte Hochspannungssteckverbindung 1 mit einer zweiteiligen druckführenden Umschließung 2, bestehend aus einem ersten Teil der Umschließung 2, die eine Verbindungsbuchse 3 ausbildet und einem zweiten Teil der Umschließung, die einen Stecker 4 ausbildet. Die Verbindungsbuchse 3 weist einen Flansch 5 und der Stecker 4 weist einen Flansch 6 auf, wobei die Flansche 5, 6 zum Verschrauben der Verbindungsbuchse 3 mit dem Stecker 4 dienen. Im verschraubten Zustand ist die druckführenden Umschließung 2 hermetisch dicht, hierzu weisen die Verbindungsbuchse 3 und der Stecker 4 Dichtflächen auf. Elektrische Leiter 7, 8 sind in Form von Stromkabeln realisiert, die durch abdichtende Kabelschotts 9, 10 in die Umschließung 2 eingeführt werden. Das in den Stecker 4 geführte Stromkabel wird durch den isolierten Gehäuseanschluss bis zu einer Isolationsplatte 11 geführt, die mechanisch mit dem Stromkabel verbunden ist und auf das Stromkabel wirkende Kräfte aufnimmt und in den Stecker 4 ableitet. Oberhalb der Isolationsplatte 11 weist das Stromkabel eine Kontaktfläche 12 auf, die in Form einer Aderendhülse ausgeführt ist, die im dargestellten Zustand keinen Kontakt mit der der Verbindungsbuchse 3 hat.

In die Verbindungsbuchse 3 wird der elektrische Leiter 7 in Form eines Stromkabels von dem Kabelschott 9 durch den isolierten Gehäuseanschluss bis zu einer Isolationsplatte 13 geführt, die mechanisch mit dem Stromkabel verbunden wird und auf das Stromkabel wirkende Kräfte aufnimmt und in die Verbindungsbuchse 3 ableitet. Jenseits der Isolationsplatte 13 weist das Stromkabel keine Isolierung auf. Die Einzelleiter 14 des Stromkabels sind vereinzelt und an der Außenkontur eines Stützkörpers 15 verlegt. Der Stützkörper 15 ist rotationssymmetrisch und weist in seiner Längsrichtung eine wellenförmige Kontur auf. Er besteht aus einem flexiblen Werkstoff, wie zum Beispiel Silikon. Der Stützkörper 15 weist hierdurch eine hohe Flexibilität in seiner Längs- und Querrichtung auf. Ein flexibler Bereich 16 des elektrischen Leiters wird hierdurch realisiert.

Die Einzelleiter 14 werden vom Stützkörper 15 durch eine Isolationsplatte 17 geführt und enden in einer Kontaktfläche 18, die als Aderendhülse ausgeführt ist. Die Aderendhülse ist mit der Isolationsplatte 17 verbunden, die die auf die Aderendhülse wirkenden Kräfte über ein Längenverstellelement 19, das durch zwei Hydraulikzylinder realisiert wird, mittels der Isolationsplatte 13 in die Verbindungsbuchse 3 leitet.

Zur Aufnahme von Restfeuchtigkeit in dem Isoliergas weist die Umschließung 2 mehrere Trocknungsmittel 20 auf.

Sind die Verbindungsbuchse 3 und der Stecker 4 miteinander verschraubt, strömt Isoliergas durch das Einlassventil 21 in die Umschließung 2 hinein und durch das Auslassventil 22 aus der Umschließung 2 heraus, bis die gewünschte Restfeuchte in der Umschließung 2 erreicht ist. Dann wird zuerst das Auslassventil 22 geschlossen, sodass sich der gewünschte Betriebsdruck von beispielweise 5 bar einstellt und auch das Einlassventil 21 geschlossen wird. Anschließend wird mit einer Handpumpe mittels der Hydraulikleitung 23 eine Hydraulikflüssigkeit in die Hydraulikzylinder befördert, sodass die Aderendhülse der Verbindungsbuchse 3 zur Aderendhülse des Steckers 4 verfahren wird. Treten die Aderendhülsen miteinander in Kontakt, wird der Druck im Hydrauliksystem erhöht, bis die gewünschte Kontaktkraft zwischen den Aderendhülsen eingestellt ist. Dieser Zustand ist in Figur 2 dargestellt, die die gleiche Ausführungsform wie Figur 1 zeigt, jedoch mit geschlossenem elektrischem Kontakt.

### BEZUGSZEICHENLISTE

| | | | |
|---|---|---|---|
| 1 | Hochspannungssteckverbindung | 16 | Bereich |
| 2 | Umschließung | 17 | Isolationsplatte |
| 3 | Verbindungsbuchse | 18 | Kontaktfläche |
| 4 | Stecker | 19 | Längenverstellelement |
| 5 | Flansch | 20 | Trocknungsmittel |
| 6 | Flansch | 21 | Einlassventil |
| 7 | elektrischer Leiter | 22 | Auslassventil |
| 8 | elektrischer Leiter | 23 | Hydraulikleitung |
| 9 | Kabelschott | | |
| 10 | Kabelschott | | |
| 11 | Isolationsplatte | | |
| 12 | Kontaktfläche | | |
| 13 | Isolationsplatte | | |
| 14 | Einzelleiter | | |
| 15 | Stützkörper | | |

## Patentansprüche

1. Gasisolierte Hochspannungssteckverbindung (1), aufweisend eine druckführende Umschließung (2), wobei ein erster Teil der Umschließung (2) eine Verbindungsbuchse (3) und ein zweiter Teil der Umschließung (2) einen Stecker (4) ausbildet, wobei der erste und der zweite Teil der Umschließung (2) jeweils zumindest einen elektrischen Leiter (7, 8) in die Umschließung (2) aufnimmt, wobei die elektrischen Leiter (7, 8) endseitig jeweils eine Kontaktfläche (12, 18) aufweisen und einer der elektrischen Leiter (7, 8), durch geeignet verlaufende Einzelleiter (14), einen Bereich (16) mit einer hohen Flexibilität aufweist, wobei die Kontaktfläche (12, 18) dieses elektrischen Leiters (7, 8) mittels eines Längenverstellelements (19) verfahrbar gelagert ist, **dadurch gekennzeichnet, dass** die elektrischen Leiter (7, 8) Stromkabel sind, die durch Kabelschotts (9, 10) in die Umschließung (2) geführt werden, wobei der flexible Bereich (16) aus Einzelleitern (14) ein Teilbereich des Stromkabels ist, das durch das Kabelschott (9) geführt ist.

2. Gasisolierte Hochspannungssteckverbindung (1) nach Anspruch 1, **dadurch gekennzeichnet, dass** die Einzelleiter (14) im flexiblen Bereich entlang zumindest eines Stützkörpers (15) verlaufen, der bevorzugt in Verfahrrichtung des Längenverstellelements (19) und/oder senkrecht dazu längenvariabel ist und weiter bevorzugt eine wellenförmige Geometrie aufweist.

3. Gasisolierte Hochspannungssteckverbindung (1) nach zumindest einem der vorhergehenden Ansprüche, **dadurch gekennzeichnet, dass** das Längenverstellelement (19) ein Linearantrieb, insbesondere zumindest ein Hydraulikzylinder ist, der bevorzugt mittels einer in die Umschließung (2) geführten Hydraulikleitung (23) gespeist wird.

4. Gasisolierte Hochspannungssteckverbindung (1) nach zumindest einem der vorhergehenden Ansprüche, **dadurch gekennzeichnet, dass** der Linearantrieb ein Gewindeantrieb ist, der mittels elektrischer oder mechanischer Energie, die in die Umschließung (2) geleitet wird, angetrieben wird.

5. Gasisolierte Hochspannungssteckverbindung (1) nach zumindest einem der vorhergehenden Ansprüche, **dadurch gekennzeichnet, dass** das Längenverstellelement (19) mittels einer Isolationsplatte (17) mit dem elektrischen Leiter (7, 8) verbunden ist.

6. Gasisolierte Hochspannungssteckverbindung (1) nach zumindest einem der vorhergehenden Ansprüche, **dadurch gekennzeichnet, dass** das Längenverstellelement (19) eine elektrische Isolierung zum elektrischen Leiter (7, 8) aufweist.

7. Gasisolierte Hochspannungssteckverbindung (1) nach zumindest einem der vorhergehenden Ansprüche, **dadurch gekennzeichnet, dass** die Umschließung (2) ein Trocknungsmittel (20), insbesondere Zeolith, aufweist.

## Claims

1. Gas-insulated high-voltage plug connection (1) having a pressure enclosure (2), wherein a first part of the enclosure (2) forms a connecting socket (3) and a second part of the enclosure (2) forms a plug (4), wherein the first and the second part of the enclosure (2) each receive at least one electrical conductor (7, 8) in the enclosure (2) , wherein the electrical conductors (7, 8) each have a contact surface (12, 18) at the end, and one of the electrical conductors (7, 8) has, by virtue of individual conductors (14) running in a suitable fashion, an area (16) with a high degree of flexibility, wherein the contact surface (12, 18) of this electrical conductor (7, 8) is mounted so that it can be moved by means of a length-adjustment element (19), **characterized in that** the electrical conductors (7, 8) are power cables which are routed into the enclosure (2) through cable penetration seals (9, 10), wherein the flexible area (16) of individual conductors (14) is a subarea of the power cable which is routed through the cable penetration seal (9) .

2. Gas-insulated high-voltage plug connection (1) according to Claim 1, **characterized in that** the individual conductors (14) run in the flexible area along at least one support body (15), the length of which can be varied preferably in the direction of movement of the length-adjustment element (19) and/or perpendicular thereto and more preferably has a corrugated geometry.

3. Gas-insulated high-voltage plug connection (1) according to at least one of the preceding claims, **characterized in that** the length-adjustment element (19) is a linear drive, in particular at least a hydraulic cylinder which is preferably fed by means of a hydraulic line (23) routed into the enclosure (2).

4. Gas-insulated high-voltage plug connection (1) according to at least one of the preceding claims, **characterized in that** the linear drive is a spindle drive which is driven by means of electrical or mechanical energy which is fed into the enclosure (2).

5. Gas-insulated high-voltage plug connection (1) according to at least one of the preceding claims, **characterized in that** the length-adjustment element (19) is connected to the electrical conductor (7, 8) by means of an insulation plate (17).

6. Gas-insulated high-voltage plug connection (1) according to at least one of the preceding claims, **characterized in that** the length-adjustment element (19) has electrical insulation from the electrical conductor (7, 8).

7. Gas-insulated high-voltage plug connection (1) according to at least one of the preceding claims, **characterized in that** the enclosure (2) has a drying means (20), in particular zeolite.

## Revendications

1. Connexion à enfichage à haute tension à isolation gazeuse (1), possédant un encapsulage (2) conduisant la pression, une première partie de l'encapsulage (2) formant une douille de connexion (3) et une deuxième partie de l'encapsulage (2) formant un connecteur (4), la première et la deuxième partie de l'encapsulage (2) accueillant respectivement au moins un conducteur électrique (7, 8) dans l'encapsulage (2), les conducteurs électriques (7, 8) possédant, du côté de l'extrémité, respectivement une surface de contact (12, 18) et l'un des conducteurs électriques (7, 8) possédant, par des conducteurs individuels (14) qui suivent un tracé approprié, une zone (16) ayant une haute flexibilité, la surface de contact (12, 18) de ce conducteur électrique (7, 8) étant supportée mobile au moyen d'un élément de positionnement en longueur (19), **caractérisée en ce que** les conducteurs électriques (7, 8) sont des câbles électriques, qui sont amenés dans l'encapsulage (2) à travers des cloisons étanches pour câble (9, 10), la zone flexible (16) composée de conducteurs individuels (14) étant une zone partielle du câble électrique qui est guidée à travers la cloison étanche pour câble (9).

2. Connexion à enfichage à haute tension à isolation gazeuse (1) selon la revendication 1, **caractérisée en ce que** les conducteurs individuels (14) dans la zone flexible suivent un tracé le long d'au moins un corps de soutien (15), lequel est de longueur variable de préférence dans la direction de déplacement de l'élément de positionnement en longueur (19) et/ou perpendiculairement à celle-ci et plus préférablement présente une géométrie ondulée.

3. Connexion à enfichage à haute tension à isolation gazeuse (1) selon au moins l'une des revendications précédentes, **caractérisée en ce que** l'élément de positionnement en longueur (19) est un mécanisme d'entraînement linéaire, notamment au moins un vérin hydraulique, lequel est de préférence alimenté au moyen d'une conduite hydraulique (23) amenée dans l'encapsulage (2) .

4. Connexion à enfichage à haute tension à isolation gazeuse (1) selon au moins l'une des revendications précédentes, **caractérisée en ce que** le mécanisme d'entraînement linéaire est un mécanisme d'entraînement à filetage, lequel est entraîné au moyen d'énergie électrique ou mécanique qui est conduite dans l'encapsulage (2).

5. Connexion à enfichage à haute tension à isolation gazeuse (1) selon au moins l'une des revendications précédentes, **caractérisée en ce que** l'élément de positionnement en longueur (19) est relié au conducteur électrique (7, 8) au moyen d'une plaque isolante (17).

6. Connexion à enfichage à haute tension à isolation gazeuse (1) selon au moins l'une des revendications précédentes, **caractérisée en ce que** l'élément de positionnement en longueur (19) possède une isolation électrique par rapport au conducteur électrique (7, 8).

7. Connexion à enfichage à haute tension à isolation gazeuse (1) selon au moins l'une des revendications précédentes, **caractérisée en ce que** l'encapsulage (2) possède un agent dessiccateur (20), notamment de la zéolithe.
